# EUROPEAN PATENT SPECIFICATION

(11) **EP 2 913 947 B1**
(45) Date of publication and mention of the grant of the patent: **27.11.2019**
(21) Application number: 14000708.9
(22) Date of filing: 27.02.2014
(51) Int. Cl.: H04J 14/02

(54) **Passive optical network and optical line terminal**
Passives optisches Netzwerk und optisches Leitungsendgerät
Réseau optique passif et terminal de ligne optique

(43) Date of publication of application: 02.09.2015
(73) Proprietor: ADVA Optical Networking SE, 98617 Meiningen (DE)
(72) Inventor: Grobe, Klaus, 82152 Planegg (DE)
(74) Representative: Eder, Thomas

(56) References cited:
- EP-A1- 2 518 912
- WO-A1-2011/134507
- US-A1- 2009 297 152
- CALVIN C K CHAN ET AL: "Novel network architectures for survivable WDM passive optical networks", OPTICAL COMMUNICATION, 2008. ECOC 2008. 34TH EUROPEAN CONFERENCE ON, IEEE, PISCATAWAY, NJ, USA, 21 September 2008 (2008-09-21), pages 1-4, XP031381168, ISBN: 978-1-4244-2227-2
- JINGJING ZHANG ET AL: "Minimizing the Arrayed Waveguide Grating Cost and the Optical Cable Cost in Deploying WDM Passive Optical Networks", JOURNAL OF OPTICAL COMMUNICATIONS AND NETWORKING, INSTITUTE OF ELECTRICAL AND ELECTRONICS ENGINEERS, US, vol. 1, no. 5, 1 October 2009 (2009-10-01) , pages 352-365, XP011328003, ISSN: 1943-0620, DOI: 10.1364/JOCN.1.000352

## Description

The invention relates to a passive optical network comprising at least two optical line terminals, a remote node and a plurality of optical node units. The invention further relates to an optical line terminal suitable for realizing such a passive optical network.

Passive optical networks (PONs) are widely used in order to connect a plurality of optical network units (ONUs), which are typically located near a customer or within a customer's premises, to an optical line terminal (OLT). The OLT usually connects the PON with a further communication network. A PON usually comprises at least one remote node (RN), which is connected to the OLT at least via a working feeder fiber. If fiber protection is required in order to increase the availability of the PON, the RN can be additionally connected to the OLT via a protection feeder fiber. Each ONU is usually connected to the RN via a (working) distribution fiber. If fiber protection is required for this connection, too, each ONU or at least some ONUs may additionally be connected to the RN via a protection distribution fiber. Such a PON is disclosed in EP 2 518 912 A1.

In this PON the RN is realized as a cyclic 1 x N arrayed waveguide grating (AWG) having a single wavelength division multiplex (WDM) port connected to the feeder fiber and a number of N distribution ports, each of which being connected to a distribution fiber. If fiber protection is required, the RN is realized as a cyclic 2 x N having an additional WDM port connected to a protection feeder fiber. Instead of a single 2 x N AWG two separate 1 x N AWGs can be used within the RN or two separate RNs in order to connect the working and protection feeder fibers to the respective working and protection distribution fibers. However, these 1xN AWGs may reveal an identical internal structure as the 2 x N AWGs, wherein for connecting the working feeder fiber to the first AWG the first WDM port is used and for connecting the protection feeder fiber to the second AWG the second WDM port is used. That is, in case of the first AWG the first WDM port must be externally connectable, whereas in case of the second AWG the second WDM port must be externally connectable, only. This means, that the two AWGs have an internal identical structure of a 2 x N AWG but are used (and appear from an external view) as a 1 x N AWG. This facilitates the design and installation of the PON, especially as identically designed AWGs may be used in order to combine the downstream (working and protection) channel signals created by a respective transmitter array and to separate the upstream (working and protection) signals created the optical transmitter devices of active ONUs.

The cyclic property of the AWG(s) is used to transmit downstream working and protection channel signals in a first optical band, e.g. the C band, and the upstream working and protection signals in a second optical band, e.g. the L band.

In the OLT two broadband seeding light sources are connected to the working transmit path and the protection transmit path. Switching means are provided to either connect the working transmit path to a first WDM port or the protection transmit path to a second WDM port of the 2 x N AWG used in the transmitter arrangement. In this way only a selected one of the two seeding light sources is active. As the seeding light source is coupled to the desired WDM port of the 2 x N AWG of the transmitter arrangement, either downstream working channel signals at the respective downstream working wavelengths or downstream protection channel signals at the respective protection working wavelengths are created and supplied to a working WDM port or a protection WDM port of the OLT.

It is a disadvantage of this PON structure that establishing a communication link to a desired ONUs requires access to the OLT, which, in general, is in the hands of a certain network provider. This PON design does not allow other providers to access the ONUs, i.e. to transmit own downstream channel signals to, and, if so desired, receive own upstream channel signals from the ONUs. Due to market requirements, future PON designs will have to provide open access capabilities. Also legislators or regulatory authorities may prescribe open access capabilities for future PONs with respect to the use of additional feeder fibers and/or wavelengths.

WO 2011/134507 A1 describes an optical access network comprising a plurality of OLTs, each connecting a dedicated operator network to each of a plurality of sub-networks, wherein each sub-network is a WDM-PON. The OLTs and a wavelength routing device are provided at a central office. The wavelength routing device comprises, at a user side, a plurality of WDM ports, wherein each of these WDM ports is connected to a remote node of one of the sub-networks. At a central office side, the wavelength routing apparatus provides a plurality of sets of ports, each set of ports being connected to a corresponding set of ports of a selected OLT. The wavelength routing device comprises a plurality of 1xN splitters, the common port of each splitter defining a respective WDM port of the wavelength routing device. Each of the N splitting ports is connected to a dedicated port of a first set of ports of a routing device, which may be realized as an NxN AWG. The second set of ports of each routing device, i.e. of the NxN AWGs, defines a respective set of ports of the central office. Thus, the wavelength routing device can separately route multiple wavelength channels of the same wavelength. This means that multiple OLTs may use the same wavelength in different WDM-PONs. Further, this allows a particular OLT to use the same wavelength for a wavelength channel serving each of a plurality of different WDM-PONs.

However, also this design of an access network requires access to the central office by each of the network providers who operate the operator networks. The connection between the remote nodes of a WDM-PON and each of the OLTs is effected by a single optical fiber connecting the WDM port of the respective remote node and the dedicated WDM port of the wavelength routing apparatus.

US 2009/0297152 A1 describes a WDM-PON protection scheme using a dual port arrayed waveguide grating (AWG), wherein a single OLT is connected to a remote node using two optical fibers, a first fiber defining a working path and a second fiber defining a protection path. The remote node is realized by a 2xN AWG defining two WDM ports and N channel ports, each of the channel ports being connected to an ONU and each of the WDM ports being connected to a respective one of the two fibers defining the working and the protection paths. This publication does not address the problem of connecting more than a single OLT to the remote node. JINGJING ZHANG ET AL: "Minimizing the Arrayed Waveguide Grating Cost and the Optical Cable Cost in Deploying WDM Passive Optical Networks",JOURNAL OF OPTICAL COMMUNICATIONS AND NETWORKING, INSTITUTE OF ELECTRICAL AND ELECTRONICS ENGINEERS, US, vol. 1, no. 5, 1 October 2009 (2009-10-01), pages 352-365, ISSN: 1943-0620, DOI: 10.1364/ JOCN.1.000352, investigates the issue of minimizing the cost of optical cables and arrayed waveguide gratings (AWGs) in deploying optical distribution networks using WDM passive optical networks (PONs). Generally, when deploying WDM PONs with cascaded AWGs, increasing the number of stages of cascaded AWGs decreases the optical fiber costs, but increases the AWG cost. A proper cascaded AWG structure and proper connections between AWGs and optical network units are needed to minimize the total cost of AWGs and optical cables. The authors decompose the network planning problem into two subproblems. One is to decide the positions of AWGs and placement of optical cables to minimize the cost of optical cables. The other one is to determine the cascaded AWG structure to minimize the total cost of AWGs and optical cables. In particular, the authors propose a recursive partition combination-based algorithm to achieve the optimal trade-off between the AWG cost and the optical cable cost.

It is thus an object of the present invention to provide a passive optical network, which makes it possible to access the optical node units from different optical line terminals, which may be in the hands of different providers, and which reveals a simple design and can be realized at low effort. It is a further object of the invention to provide an optical line terminal, which is suitable to be used for realizing such a passive optical network.

The invention achieves these objects with the combinations of features of patent claims 1 and 16, respectively. Further embodiments of the invention are apparent from the dependent claims.

The invention is based on the finding that a PON having certain open access features can easily be realized if at least two OLTs are coupled to a RN having a number of M WDM ports and a number of N distribution ports, which comprises a passive optical filter device adapted to realize the spectral and spatial filter property of an M x N arrayed waveguide grating. In this structure, the RN or the specific passive optical filter device comprised by the RN define the wavelengths of the transparent optical transmission paths between the OLT and each ONU, wherein each transparent optical transmission path comprises the respective working feeder fiber connecting the WDM working port of the respective OLT to a dedicated WDM port of the RN, the optical path for the respective wavelength within the RN and the respective distribution fiber connecting the respective distribution port of the RN and the communication port of the respective ONU.

According to the invention, each optical line terminal is operable to unidirectionally or bidirectionally communicate with one or more selected or all ONUs using optical channel working signals. To achieve this, each OLT is operable to create and to supply to the working fiber respective downstream optical working channel signals. Each of the downstream optical channel working signals is created at a downstream working wavelength suitable for establishing, at the respective downstream working wavelength, a communication link between the OLT and the respective ONU. As stated above, the respective downstream working wavelength is defined by the filter properties of the RN.

As each OLT is coupled to a dedicated WDM port of the RN, each transmission path between an ONU and the different OLTs requires a different wavelength. This behavior is caused by the filter properties of the RN, as each optical path between the M WDM ports and a selected one of the N distribution ports of the RN requires a different wavelength.

Thus, this PON structure makes it possible to access the ONUs from different OLTs, which may be owned by different providers. In order to extend an existing PON as, e.g. described in EP 2 518 912 A1, it is only necessary to replace the RN with a RN having the spectral and spatial filter properties of an appropriate M x N AWG. Further OLTs can then be connected to the RN whenever required. However, a separate working feeder fiber and, if fiber protection is required, a further protection feeder fiber is necessary. The respective ONUs accessible from more than one OLT may either have a broadband receiver, if it can be guaranteed that a single selected OLT is transmitting a respective channel signal (i.e. at a wavelength so that the channel signal is directed to the desired ONU) at a time, or a tunable or selective receiver enabling the ONU to select the channel signal of a plurality of channel signals (having different wavelengths) to be detected.

As each transmission path between a WDM working or protection port of each OLT and a selected ONU has a different wavelength this PON structure allows multiple communication links between the ONUs and the OLTs, more precisely, simultaneously existing communication links between each OLT and a selected ONU.

According to the invention, the PON comprises a common control device, which is adapted to control the function of each OLT in such a way that the desired optical communication links between the OLT and the ONUs are established.

The common control device may comprise local control units included in the OLTs, wherein the local control units are arranged to communicate with each other. In this embodiment, one of the local control units forming the common control device may act as a master unit, whereas the other local control units act as clients.

Alternatively, the common control device may comprise local control units included in the optical line terminals and a central control unit, the local control units being arranged to communicate with the central control unit. The central control unit may, in this embodiment, act as a master, whereas the local control units act as clients.

The OLTs may in this way communicate with each other or with the central control unit, especially in order to provide or receive information required concerning active and/or inactive communication links. This enables an OLT to decide whether or not it is allowed to establish a communication link to a selected ONU at the given wavelength (or at the given two wavelengths, if downstream and upstream channel signals reveal different wavelengths in different optical bands).

The internal control functions of an OLT may be taken over by an OLT control unit. This OLT control unit may, for example, control the wavelengths of the optical transmitter devices, if tunable optical transmitter devices are used, including the shifting of the transmitter wavelengths in case of switching from optical channel working signals to optical channel protection signals and vice versa. If reflective optical transmitter devices are used in the OLT, the OLT control unit may control the seeding of the transmitter devices, including the control of optical switches for selecting the transmitter devices to be seeded or the control of optical switches for selecting a seeding light source from a group of at least two seeding sources.

According to an embodiment of the invention in which fiber protection between an OLT and the RN is required, the respective OLT has a WDM protection port, which is connected to a dedicated remote node WDM port by a protection feeder fiber. The respective OLT is operable to create and to supply to the protection feeder fiber respective downstream optical channel protection signals, each of the downstream optical channel protection signals being created at a downstream protection wavelength suitable for establishing, at the respective downstream protection wavelength, a communication link between the OLT and the respective ONU via an optical protection transmission path comprising the protection feeder fiber, the RN and the respective distribution fiber.

According to an alternative of this embodiment, the optical line terminals are arranged to switch, if a failure in at least one working communication link is detected, from communicating with the optical node units via the respective working communication links and the respective optical working transmission paths to communicating with the optical node units via the respective protection communication links and the respective optical protection transmission paths by creating downstream optical protection signals instead of creating downstream optical working signals.

In a preferred embodiment, the passive optical filter device of the remote node is designed in such a way that the M WDM ports and the N distribution ports are neighboring ports with respect to the spectral and spatial filter property of the passive optical filter device, wherein downstream optical channel working or protection signals, which can be passed through from a given WDM port i, with i being an integer number between 1 and M, to neighboring distribution ports j and j+1, with j being an integer number between 1 and N-1, or upstream optical channel working or protection signals, which can be passed through from a given distribution port j, with j being an integer number between 1 and N, to neighboring WDM ports i and i+1, with i being an integer number between 1 and M-1, are spaced apart by the wavelength grid spacing defined by the grid filter property of the remote node or an integer multiple thereof.

This is the normal property of a M x N AWG, if the M WMD ports and the N distribution ports, which are connected to the respective internal star coupler region of the AWG, are neighboring ports with respect to their spatial position in the star coupler region. Due to this neighboring spatial position in the star coupler region, two (spatially) neighboring ports also define pass-through paths between a selected port of the respective other side of the AWG (the side with the WDM ports or the distribution ports) having neighboring wavelengths (separated by a single grid spacing) with respect to the spectral grid filter property of the AWG, i.e. the neighboring wavelengths are spaced apart by a single grid spacing.

However, it would also be possible to design an AWG in such a way that the ports are separated by a multiple of the grid spacing. Even an irregular spacing (with respect to the wavelength) between respective neighboring ports would be possible. A regular spacing, of course, facilitates the design of the PON, especially the design of the OLT.

If the passive optical filter device of the RN reveals the property of an ideal AWG structure and if all possible distribution ports of the ideal AWG structure are used, it would be possible to use a set of N wavelengths to establish N working communication links between an OLT and the ONUs (each communication link between an ONU and the OLT having a wavelength defined by the RN), only, due to the ideal and fully cyclic behavior of the AWG (here the term "cyclic" is used for the following property of an ideal M x N AWG (with j=1 to M port at the one side of the AWG and k=1 to N ports at the other side of the AWG and generally N > M): the N neighboring wavelengths λ₁ to λ_{N} input at port j=1 are output at ports k=1 to k=N in the given sequence, i.e. λ₁ is output at port k=1, λ₂ is output at port k=2, ... , λ_{N} is output at port k=N; the N neighboring wavelengths λ₁ to λ_{N} input at port j=2 are output at ports k=2 to k=N and port k=1, i.e. λ₁ is output at port k=2, λ₂ is output at port k=3, ..., λ_{N-1} is output at port k=N and λ_{N} is output at port k=1; etc; the N neighboring wavelengths λ₁ to λ_{N} input at port j=M are output at ports k=M to k=N and ports k=1 to k=M-1, i.e. λ₁ is output at port k=M, λ₂ is output at port k=M+1, ... , λ_{N-M+1} is output at port k=N, λ_{N-M+2} is output at port k=1 and λ_{N} is output at port k=M-1).

However, real AWGs having such an ideal behavior for a high number of ports (on the same side of the AWG) are difficult to manufacture. Thus, in practice, the possible ports at the edge or outer regions of the respective star coupler region remain unused. As a result, a higher number of wavelengths in the feeder area between the OLTs and the RN is necessary. The number of wavelengths n_{w} can be calculated to be n_{w}=n + (m - 1), wherein n is the number of ONUs to be connected (at the maximum n=N, i.e. n equals the number N of distribution ports) and m is the number of WDM ports of the RN connected to a feeder fiber, irrespective of the fact whether these are working or protection feeder fibers. If all OLTs are connected to the RN by a working feeder fiber and a protection feeder fiber, the maximum number of OLTs connectable to the RN is M/2 (more precisely, the integer value of M/2). It is, however, possible to connect one part of the OLTs via a working feeder fiber, only, and the other part of the OLTs via a working and a protection feeder fiber to the RN, depending on whether or not fiber protection is required between the respective OLTs and the RN.

According to a preferred embodiment, the passive optical filter device of the remote node comprises or exclusively consists of an N x M arrayed waveguide grating. This is, of course the simplest way to realize the desired spatial and spectral filter properties of the RN.

It is advantageous to connect the WDM working port and the WDM protection port of an optical line terminal to neighboring WDM ports of the remote node. In this way, the working wavelength and the protection wavelength of the working and transmission paths between the OLT and a selected ONU are neighboring wavelengths, too. If active tunable laser transmitter devices are used in the OLT, the switching from a respective working wavelength to a respective (neighboring) protection wavelength can be effected faster than in case of a greater distance between the two wavelengths, as each optical transmitter device must be controlled to shift the wavelength by a single grid spacing (or a multiple grid spacing, if one or more possible ports - in the internal AWG structure - have been skipped between the external AWG ports).

According to another embodiment of the invention, the remote node comprises a passive optical filter device adapted to realize the function of an M x N cyclic arrayed waveguide grating or the passive optical filter device of the remote node comprises or exclusively consists of a cyclic N x M arrayed waveguide grating. This allows the use of different wavelength bands for upstream and downstream optical channel signals in order to realize bidirectional communication links. The OLTs may create downstream optical working or protection signals having wavelengths in a first band defined by the remote node passive optical filter device, and the ONUs may create upstream working or protection signals having wavelengths in a second band of the remote node passive optical filter device.

In a specific embodiment, an OLT may comprise a first passive optical filter device within a transmit path of the OLT and a second passive optical filter device within a receive path of the OLT. The WDM working port of the OLT may, in this embodiment, be connected to a first WDM port of the first passive optical filter device and to a first WDM port of the second passive optical filter device via a first directional coupler, and the first and second passive optical filter devices may have, with respect to the first WDM ports, essentially identical spatial and, with respect to the wavelengths of the signals guided in the transmit and receive paths, identical spectral filter properties as the remote node passive optical filter device has with respect to the WDM port, which is connected, via the respective working feeder fiber, to the working WDM port of the respective optical line terminal.

If, in this embodiment, fiber protection between the OLT and the RN is required, the WDM protection port of the OLT may be connected to a second WDM port of the first passive optical filter device and to a second WDM port of the second passive optical filter device via a second directional coupler, the first and second passive optical filter devices preferably having, with respect to the second WDM ports, essentially identical spatial and, with respect to the wavelengths of the signals guided in the transmit and receive paths, identical spectral filter properties as the remote node passive optical filter device has with respect to the WDM port, which is connected, via the respective protection feeder fiber, to the protection WDM port of the respective OLT.

This enables to use passive optical filter devices in the remote node and in an OLT having an identical structure (and therefore having identical spatial and spectral filter properties), which simplifies the design of the OLTs and of the whole PON. Of course, in an OLT, the unused WDM ports - as compared to the passive optical filter device in the RN - do not need to be physically present.

In another embodiment, the optical node units comprise a broadband receiver device and the common control device is adapted to control the at least two optical line terminals in such a way that only a single communication link is established at a time between an OLT and a selected ONU. This allows the use of simple and less expensive broadband receiver devices in the ONUs. In this embodiment, the local control unit of the OLT, which has already established a communication link to the selected ONU informs the other OLTs (more precisely, to the local control units of the other OLTs), either via direct communication or via the central communication device, that a communication link to this ONU already exists. Accordingly, the local control units of the other OLTs control the respective OLT in such a way that no further communication link (even if this had another wavelength) is established to the same ONU.

Alternatively, the optical node units may comprise wavelength selective receiver devices. In that case, the common control device may be adapted to control

the at least two OLTs in such a way that multiple communication links are establishable simultaneously, each between a selected OLT and the same selected ONU. For each of the multiple communication links a different wavelength is used due to the spectral and spatial filter property of the passive optical filter device of the RN.

As explained above, each OLT may be adapted to be able to selectively establish communication links with each of the optical node units, preferably by selectively activating/deactivating N optical transmitter devices comprised within the OLT, which may be realized as laser transmitter devices or reflective transmitter devices.

In a further embodiment, in each OLT reflective optical transmitter devices may be used instead of tunable transmitter devices. In order to seed these reflective optical transmitter devices a central seeding unit may be provided, which can be comprised by an OLT or provided separately. The central seeding unit comprises at least one seeding light source adapted to create a seeding light for the reflective optical transmitter devices. Each OLT may comprise optical switching means adapted to switch the seeding light either to a first or a second transmission path of the OLT, which may serve as a working transmission path, or to a protection transmission path. Further, the central seeding unit may comprise an optical switching means adapted to selectively connect one of at least two seeding light sources to a respective seeding input of a selected OLT. The seeding light sources may be provided as redundant seeding light sources or for creating seeding light in different optical bands.

Likewise, the optical transmitter devices in the ONUs may be reflective optical transmitter devices and the central seeding unit may be configured to create and feed seeding light for the ONU transmitters to the OLTs. Also, in these embodiments, optical switching means may be provided to selectively connect one of at least two seeding light sources to a selected OLT or to a selected seeding input of an OLT, in case an OLT provides more than one communication path (especially a working path and a protection path), as explained above.

In the following, the invention will be described with reference to the embodiments apparent from the drawing. In the drawing, the Figures show:
- Fig. 1: a schematic block diagram of an embodiment of a PON comprising several OLTs and a plurality of ONUs which are connected via a RN including a cyclic M x N AWG;
- Fig. 2: a diagram visualizing the principle of an M x N AWG as used for the RN in Fig. 1;
- Fig. 3: a schematic block diagram of an embodiment of a PON as generally shown in Fig. 1, wherein the OLTs include cyclic M x N AWGs identical to the AWG used in the RN ;
- Fig. 4: a schematic block diagram of an embodiment of a PON similar to the embodiment in Fig. 3, wherein the OLTs further include a common control device comprising local control units in each OLT and wherein the ONUs comprise tunable optical transmitter devices;
- Fig. 5: a schematic block diagram of an embodiment of a PON similar to the embodiment in Fig. 4, the ONUs comprising tunable receiver devices;
- Fig. 6: a schematic block diagram of an embodiment of a PON similar to the embodiment in Fig. 4, wherein additionally a central seeding unit is provided for seeding reflective optical transmitter devices included in the OLTs; and
- Fig. 7: a schematic block diagram of an embodiment of a PON similar to the embodiment in Fig. 4, wherein the central seeding unit is provided for seeding reflective optical transmitter devices included in the ONUs.

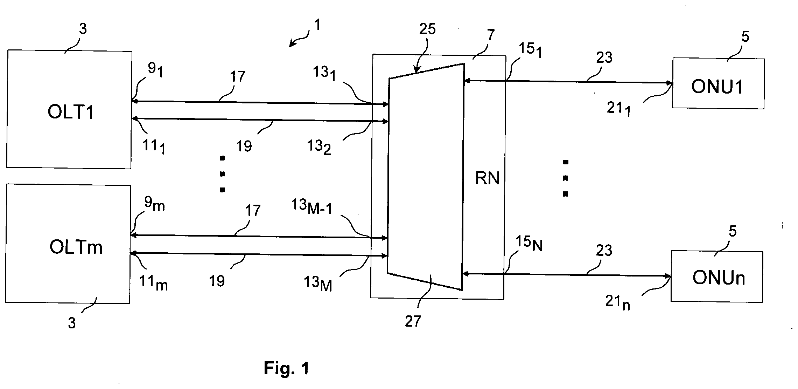

Fig. 1 shows a PON 1 comprising m OLTs 3 and n ONUs 5, which are connected via a RN 7. Each OLT 3 has a WDM working port 9ᵢ (i=1..m) and a WDM protection port 11ᵢ (i=1..m). The RN 7 has M WDM ports 13ⱼ (j=1..M) and N distribution ports 15ₖ (k=1...N). Each WDM working port 9ᵢ is connected to a dedicated WDM port 13ⱼ by a working feeder fiber 17 and each WDM protection port 11ᵢ is connected to a dedicated WDM port 13ⱼ+1 by a protection feeder fiber 19.

Each ONU 5 has a communication port 21, which is connected to a dedicated distribution port 15ₖ of the RN by a distribution fiber 23. In Fig. 1 n=N ONUs 5 are connected to the RN 7. However, the number N of distribution ports 15ₖ may be higher than the number n of actually connected ONUs 5 and the unconnected ports 15ₖ may serve for extension purposes.

As shown in Fig. 1, at a maximum, m=M/2 OLTs 3 can be connected to the RN 7, if fiber protection is required for each OLT (M being an even integer number). However, fiber protection is not mandatory. As at least a working connection via a working feeder fiber 17 is necessary in order to connect an OLT 3 to the RN 7, the maximum number of OLTs 3 connectable to the RN 7 (without fiber protection in the feeder section) is M. It is, of course, also possible to connect one or more OLTs 3 via a working and protection feeder fiber 17, 19 and the rest of the OLTs 3 via a working fiber 17, only.

The RN 7 comprises a passive optical filter device 25 adapted to realize a spectral and spatial filter property of an M x N arrayed waveguide grating (AWG). The passive optical filter device 25 defines the M WDM ports and the N distribution ports of the RN 7. Of course, the most direct way to realize the passive optical filter device 25 is to use an M x N arrayed waveguide grating 27, which is usually manufactured as photonic integrated circuit (PIC) or integrated optical circuit.

Generally, a PON, like the embodiment in Fig. 1, is capable of establishing bidirectional communication links between any selected ONU 5 and a respective OLT 3. It is, of course, also possible to establish unidirectional links, too, which may serve to carry unicast, multicast or broadcast traffic or data streams. As a passive optical filter device or an M x N AWG works bidirectionally, each transparent optical communication path between an OLT 3 and a selected ONU 5 may serve for both a respective downstream (working or protection) communication link and a respective upstream (working or protection) communication link. According to the properties of an M x N AWG, each optically transparent path between a WDM port 13ⱼ and a distribution port 15ₖ is only possible for an optical channel signal (regardless of whether it is an upstream or downstream or working or protection channel signal) having a specific wavelength or bandwidth, respectively.

As, for the purpose of the invention and the present description, the nature of an optical channel signal that is used for the unidirectional (OLT to ONU or vice versa) communication or bidirectional communication is of no specific interest, it is referred to a channel signal by its specific optical wavelength λ, only.

Each transparent optical path between a WDM port 13ⱼ and a distribution port 15ₖ of an M x N AWG is assigned to a respective wavelength λₖ^{j}, wherein each distribution port 15ₖ and, thus each ONU 5, can be reached from each WDM port, and thus from each OLT 3, by a different, unique wavelength.

If an ideal M x N AWG 27 is used as a passive optical filter device 25 (or a passive optical filter device having the same function but realized in a different way), a maximum of n=N channel signals at respective n different wavelengths λₖ^{j}, spaced apart by a grid spacing of the spectral filter characteristic of the AWG, can be used to establish communication links between each of the WDM ports 13ⱼ and the n distribution ports 15ₖ. If the index k=1 indicates the lowest wavelength and k=n the highest wavelength, a set of wavelengths λₖ¹ with k=1...n can be used to establish communication links between WDM port 13₁ and each of the distribution ports 15₁ to 15ₙ. The same set of wavelengths can be used as wavelengths λₖ² with k=1...n to establish communication links between WDM port 13₂ and each of the distribution ports 15₂ to 15ₙ and 15₁, and so forth. That is, using the same set of wavelengths at a second WDM port 13ⱼ₊₁ neighboring a first WDM port 13ⱼ results in a cyclic shift of the index of the distribution ports, i.e. to a cyclic shift of the associated distribution ports 15ₖ to new associated distribution ports 15ₖ₊₁. In case of an ideal AWG, k=n results in a cyclic shift to k=1.

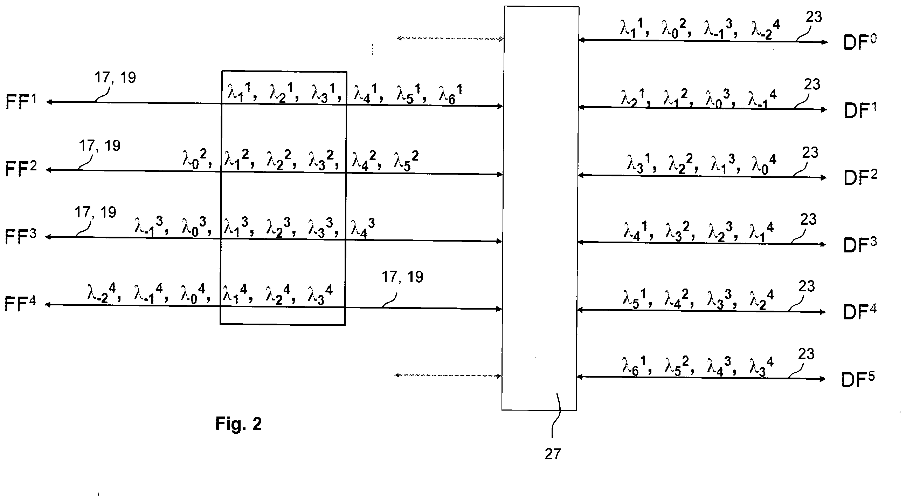

However, as an ideal M x N AWG is difficult to manufacture for a higher number of (WDM or) distribution ports, it is necessary to use additional wavelengths in the feeder area. This approach will now be explained with regard to Fig. 2.

Fig. 2 shows a schematic view of a passive optical filter device 25 having the spatial and spectral filter characteristics of a real 4 x 6 AWG, which can, of course, be realized as 4 x 6 AWG in the form of a photonic integrated circuit (PIC) or integrated optical circuit. At the left side, the ports which may be used as WDM port 13ⱼ of the passive optical filter device 25 in Fig. 1, (channel signals at) wavelengths λₖ¹, k=1...6, are supplied to WDM port 15₁ via a feeder fiber, designated as FF1. The feeder fibers FF1 to FF6 shown in Fig. 2 may act as working or protection feeder fiber 17, 19 in Fig. 1. The wavelengths λ₁¹ to λ₆¹ allow transparent optical paths to the ports at the right side of the passive optical filter device 25, which may be used as distribution ports 15ₖ of the RN 7 in Fig. 1. Of course, the transparent paths may be used bidirectionally.

The dashed lines on the left side of the passive optical filter device 25 in Fig. 2 indicate unused ports of a real AWG, which would theoretically be possible but are not realized at all or not externally accessible. The same may apply to the right side of the passive optical filter device 25 or AWG.

If the ports 13ⱼ and 13ⱼ₊₁ and 15ₖ and 15ₖ₊₁ are neighboring ports and the same set of wavelengths λ₁² to λ₆² would be supplied to WDM port 13₂, the transparent optical paths between WDM port 13₂ and the distribution ports 15₂ to 15₆ are used. The wavelength λ₆² would, in case of this non-ideal AWG, not be passed through to port 15₁ but to a "non-existing" or unusable port 15₇. Thus, an additional wavelength λ₀² is used instead of the unusable wavelengths λ₆² to enable a transparent optical path between WDM port 13₂ and distribution port 15₁.

Likewise, if wavelengths λ₀³ to λ₅³ are supplied to WDM port 15₃, wavelength λ₅² would not be usable, as the AWG defines no usable optical path therefore. Again, an additional wavelength λ₋₁² is used to establish a transparent optical path between WDM port 13₃ and distribution port 15₁. Of course, wavelength λ₀³ can be used to establish a communication link between WDM port 13₃ and distribution port 15₂.

This means that in case of a real M x N AWG, as compared to the use of an ideal M x N AWG , a number of m-1 additional wavelengths (m being the number of used WDM ports, regardless of whether these are used for protection or working communication links) are required to enable a communication link between each selected WDM port 13ⱼ and each of the distribution ports 15ₖ. Thus, the total number of wavelengths is n+(m-1).

In case of an exemplary PON revealing this structure and comprising a RN 7 having eight WDM ports, which are used to connect four OLTs via a working and protection feeder fiber, and 40 distribution ports for connecting 40 ONUs, this leads to a set of 47 wavelengths in order to allow each OLT to communicate with each of the ONUs. Thus, in practical embodiments, in which the number n of ONUs is generally higher by several factors, the use of a non-ideal M x N AWG (or passive optical filter device) having the above properties is acceptable. Only rather few additional wavelengths, as compared to the total number of wavelengths in case of an ideal filter device, are required.

If the upstream wavelengths (i.e. the optical channel signals created by the ONUs and received by the respective OLT) shall be different from the downstream wavelengths (i.e. the optical channel signals created by the OLTs and received by the respective ONU) in a bidirectionally working PON, e.g. in order to avoid signal deterioration through reflections or scattering, a cyclic passive optical filter device 25 (e.g. in the form of a cyclic AWG) can be used. Here, the term "cylic" means that the filter device 25 shows essentially the same spatial and spectral filter properties in another (usually higher order) optical band. For example, the downstream wavelengths may lie in the optical C band, whereas the upstream wavelengths may lie in the L band.

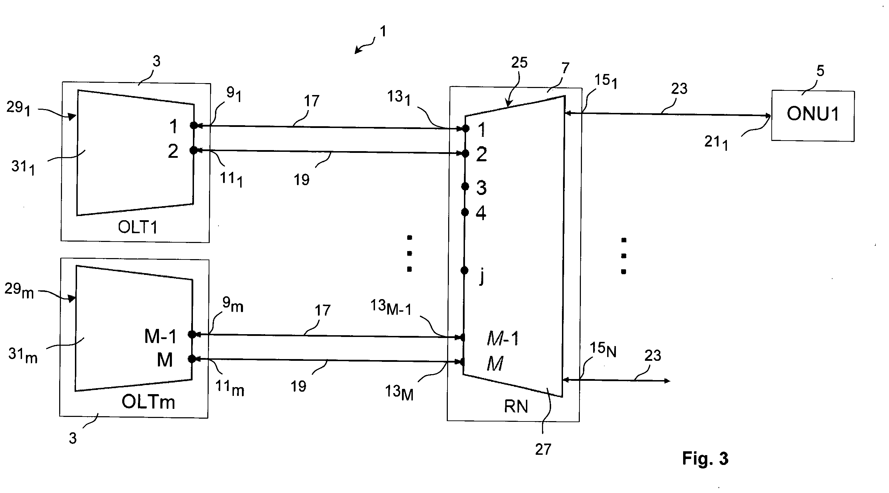

Fig. 3 shows an embodiment of a PON 1 according to Fig. 1 in greater detail. Here, essentially identical passive M x N optical filter devices 29ᵢ in the form of M x N AWGs 31ᵢ (i=1...m) are used in the OLTs 3 and in the RN 7. Even though a single M x N optical filter device 29ᵢ in the form of an M x N AWGs 31ᵢ is shown in each OLT 3, which serves both the task of combining the optical paths for the downstream wavelengths and the task of separating the paths for the upstream wavelengths (these optical paths still being physically identical), two filter devices 29ᵢ or M x N AWGs 31ᵢ may be used, each of which being provided in the optical path for the downstream wavelengths and in a physically separate path for the upstream wavelengths.

As apparent from Fig. 3, the passive M x N optical filter devices 29ᵢ (e.g. in the form of M x N AWGs 31ᵢ) are connected to the respective working feeder fiber 17 and to the respective protection feeder fiber 19 using the same WDM ports, which are used to connect the respective working feeder fiber 17 and protection feeder fiber 19 in the RN 7 (the WDM ports define the WDM working and protection ports of the OLTs). This being the prerequisite for the correct set of n wavelengths being supplied to the dedicated WDM port in case of the use of a non-ideal M x N optical filter device 29ᵢ (e.g. in the form of a M x N AWGs 31ᵢ), as explained with regard to Fig. 2. Otherwise, it cannot be guaranteed that all of the wavelengths supplied to a selected WDM working or protection port 9ᵢ, 11ᵢ are suitable to define a pass-through path connected to a respective local port of the filter device 29ᵢ or AWG 31ᵢ (an incorrect wavelength, which is supplied to a respective WDM port, would require to be output at an unused or physically not existing local port of the AWG).

As in Fig. 1 the OLTs in Fig. 3 are connected to the RN 7 using neighboring WDM ports of the passive optical filter devices 29ᵢ or M x N AWGs 31ᵢ. This is advantageous as in order to switch from a set of working wavelengths to a set of protection wavelengths in an OLT 3, a shift of a single grid spacing for each optical transmitter device is required, only.

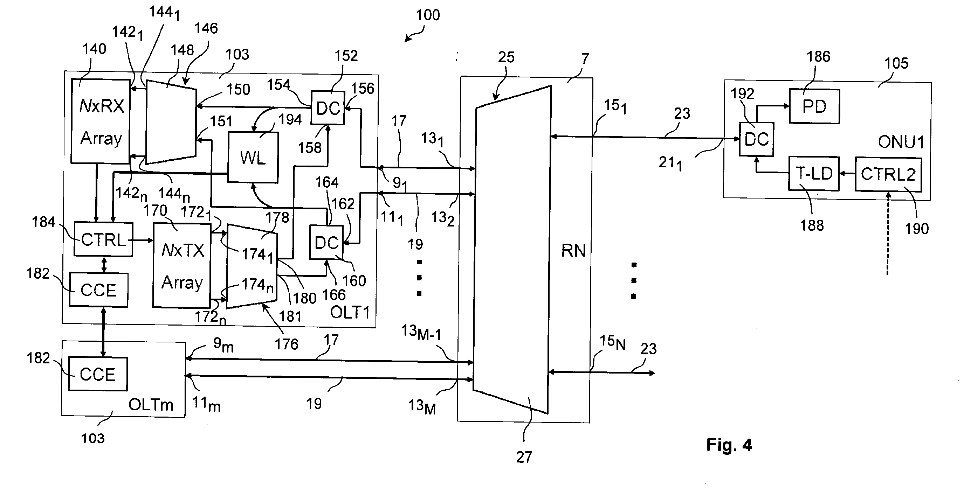

Fig. 4 shows an embodiment of a PON 100 comprising a number of m OLTs 103, which are connected to n ONUs 105 via a remote node 7. The general structure is thus identical to the PON structure in Fig. 1 and 3 so that corresponding elements and features are referred to by identical reference signs as in Fig. 1 and 3. As is the case for the embodiments in Fig. 1 and 3, in Fig. 4 the number M of WDM ports 13ⱼ of the RN 7 (defined by or identical with the WDM ports of the passive optical filter device 25 or the AWG 27, respectively) is M=2m, too, i.e. all WDM ports are connected to a respective OLT 103.

Each OLT 103 comprises an array 140 of optical receiver devices. Each input port 142ₖ (k=1...n) of the array 140 is connected to a local output port 144ₖ (k=1...n) of a first passive optical filter device 146 having the same spatial and spectral filter properties as an M x N AWG. As apparent from Fig. 4, the first passive optical filter device 146 may be realized as a single M x N AWG 148. Of course, the filter device 146 or the AWG 148 must be able to appropriately demultiplex the upstream working and protection wavelengths created in the ONUs 105, i.e. the filter device 146 or the AWG 148 must be configured to define suitable transparent optical paths for the working and protection communication links established between the ONUs 105 and the respective OLT 103 and their respective receiver devices. A WDM working port 150 of the M x N AWG 148 is connected to an output port 154 of a directional coupler device 152, which separates the optical paths for receiving upstream working wavelengths (i.e. upstream optical channel working signals) supplied to the WDM working port 9ₘ of the respective OLT 103, wherein the WDM working port 9ₘ of the OLT 103 is connected to a WDM port 156 of the directional coupler device 152.

The WDM protection port 11ᵢ (i=1...m) of each OLT 103 is connected to a WDM port 162 of a further directional coupler device 160. An output port 164 of the directional coupler device 160 is connected to a WDM protection port 151 of the M x N AWG 148.

The directional coupler device 152 is adapted to pass through upstream working wavelengths received at the WDM port 156 to the output port 154 and to pass through downstream working wavelengths created in the OLT 103, which are received at an input port 158 to the WDM port 152. Likewise, the directional coupler device 160 is adapted to pass through upstream protection wavelengths received at the WDM port 162 to the output port 164 and to pass through downstream protection wavelengths created in the OLT 103, which are received at an input port 166, to the WDM port 162.

If the upstream working and protection wavelengths lie in the same band as the downstream working and protection wavelengths, the directional coupler devices 152, 160 can be realized as optical circulator devices. If different bands are used for the downstream and upstream working and protection wavelengths, e.g. if the downstream wavelengths are in the C band and the upstream wavelengths are in the L band, alternatively, an optical diplexer device can be used.

Each OLT 103 further comprises an array 170 of tunable optical transmitter devices, e.g. tunable optical lasers. Each output port 172ₖ (k=1...n) of the array 170 is connected to a local input port 174ₖ (k=1...n) of a second passive optical filter device 176, preferably having the same spatial and spectral filter properties as an M x N AWG. As apparent from Fig. 4, the first passive optical filter device 176 may be realized as a single M x N AWG 178.

The tunable transmitter devices create downstream working or protection wavelengths, which are multiplexed by the AWG 178 and output at a WDM working port 180 or at a WDM protection port 181, depending on the respective wavelengths and the local input port 174ₖ to which the respective wavelengths are supplied. The WDM working port 180 is connected to the input port 158 of the optical directional coupler 152 and the WDM protection port 181 is connected to the input port 166 of the optical directional coupler 160.

As explained above with regard to Fig. 2 and 3, the M x N AWGs 148 and 178 must be adapted to the M x N AWG in the RN. It is, of course, possible to use specifically designed AWGs in order to match the corresponding requirements. However, the use of identical AWGs, at least with respect to their internal structure, is advantageous with respect to costs.

Each OLT 103 further comprises a local control unit 182 and a control device 184. The control device 184 is adapted to control the optical transmitter devices, especially with respect to the wavelengths of the signal created, and the receiver devices. The control device 184 further receives data (not shown in the figures) and controls the transmitter devices in such a way that each working or protection wavelength, i.e. the respective optical signal created at this (carrier) wavelength, comprises the information according to the data to be transmitted at the respective wavelength or within the respective optical downstream working or protection signal.

Switching from the downstream working channel signals to downstream protection signals in an OLT 103 is simply effected by switching the wavelengths in such a way that the protection path is used instead of the working path, i.e. the wavelengths are changed so that the respective signals are output at the WDM protection port 181 instead of at the WDM working port 180 of the AWG 178. Switching from the downstream protection channel signals to downstream working signals in an OLT 103 is achieved accordingly. These and other direct control tasks are carried out by the control device 184.

The control device 184 may, in case that switching from the working path to the protection path is required, inform the ONUs accordingly, if the ONUs are not capable to detect at which wavelength the downstream communication link with a respective OLT is operated, e.g. as the ONUs comprise a broadband receiver device 186, as is the case in the embodiment according to Fig. 4. Here, the ONUs 105 comprise a photodiode that is capable of opto-electrically converting a received downstream (working or protection) channel signal at any wavelength. As an ONU 105 receives the information included in a downstream (working or protection) channel signal whether the communication link is a working or protection communication link (i.e. whether the optical working or protection path is used) it creates the respective upstream (working or protection) channel signal appropriately, i.e. the upstream wavelength is chosen accordingly. In order to enable the required wavelength switching in the ONUs, the ONUs 105 comprise tunable optical transmitter devices 188, too. These are controlled by an ONU control unit 190.

The ONUs 105 in Fig. 4 comprise a directional coupler device 192 for combining and separating the downstream path and the upstream path as each ONU 105 is coupled to the RN 7 by a single distribution fiber, only. As regards the function and possibilities to realize the directional coupler device 192, it can be referred to the description concerning the directional coupler devices 156, 162 in the OLTs 103.

The dashed arrow in Fig. 4 indicates that it is also possible to supply the information concerning the wavelength of the upstream channel signal elsewise, e.g. via a management channel between an OLT or a central control entity (not shown), which monitors the availability of the working paths and protection path and transmits the information which path is to be used to the respective OLT and the ONUs.

At this point it shall be mentioned that the working path is the optical path an optical channel (working or protection) signal takes between the respective transmitter device and receiver device, i.e. a downstream (working and protection) path comprises all optical waveguides and the optical paths through all (passive) optical elements between the output port of the respective transmitter device of the respective OLT and the input port of the receiver device of the respective ONU and an upstream (working or protection) path comprises all optical waveguides and the optical paths through all (passive) optical elements between the output port of the respective transmitter device of the respective ONU and the input port of the receiver device of the respective OLT.

The local control units 182 included in each OLT 103 in Fig. 4 communicate with each other, especially to exchange information concerning the communication links (at least the downstream communication links) which are active between the respective OLT 103 and the ONUs 105. In this way, each OLT 103 receives the information which ONU 105 is actually not communicating with another OLT 103 and may thus be addressed by the respective OLT 103. This communication between the OLTs 103 in the embodiment according to Fig. 4 is necessary as each ONU 105 comprises a broadband receiver device 186. This does not allow simultaneously receiveing more than one optical channel signal (at what wavelength whatsoever) as the signals could not be separated.

The local control units 182 may be configured in such a way that one of the local control units 182 acts as a master and assigns allowable (or available) communication links (between a respective OLT and the ONUs) to the other OLTs 103. The OLTs 103 use this information to establish a communication link between a selected transmitter device (which is capable of creating the required wavelength) and an available ONU 105, only. The master local control unit 182 decides which of the other OLTs 103 is to be preferred if more than one of the other OLTs 103 requests a communication link to the same ONU 105.

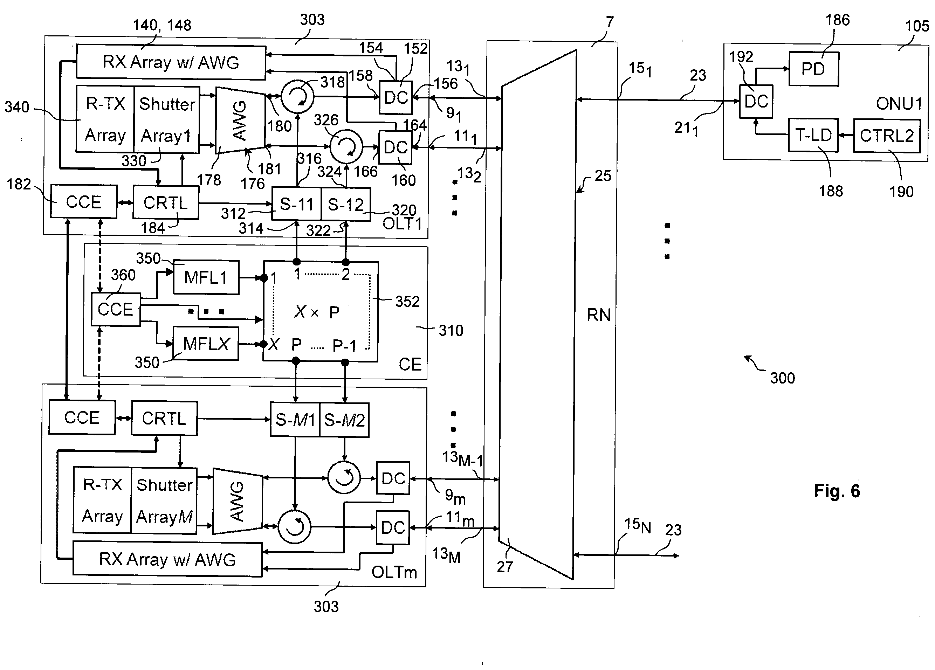

Of course, instead of using a master local control unit 182, a central control unit (see e.g. the embodiment according to Fig. 6) may be provided. It shall be understood that the local control units 182 or the local control units and a central control unit form a common control device, which is adapted to control the OLTs 103 in such a way that allowable communication links (regardless whether these are working or protection communication links) are established between an ONU and one or more OLTs, only (more than one communication link between an ONU and two or more different OLTs are only allowable if the ONU receiver device is configured to separate downstream channel signals having different wavelengths).

It should further be understood that a central control unit may be comprised of a selected OLT instead of being a separate unit. The local control units 182 may also be comprised of the ONU control devices 184, the ONU control devices 184 being configured to take over the tasks of a local control unit 182.

The OLTs 103 in Fig. 4 further comprise a wavelength locking device 194 adapted to receive a small portion of the optical power of at least one upstream working or protection channel signal. For this purpose, optical splitters are provided within the optical paths between the WDM working port 150 and the output port 154 of the optical splitter device 152 and the WDM protection port 151 and the output port 164 of the optical splitter device 160. The wavelength locking device 194 detects the optical power included in a selected upstream channel signal and supplies this information to the control device 184, which controls the suitable transmitter device 170 of the transmitter array in such a way that this information is transmitted to the respective ONU 105, which creates the respective upstream channel signal. In this way, the ONU can control the tunable transmitter device 188 in such a way that the signal wavelength matches best the wavelength defined by the passive optical filter devices 25 and 146 included in the RN 7 and the OLT 103, respectively. Of course, instead of transmitting information concerning the optical power of the upstream channel signal received, the OLT 103 may already determine a tuning information (i.e. the direction and amount of a wavelength shift required in the ONU in order to match the desired channel wavelength) and transmit this tuning information to the respective ONU 105.

In order to make it possible to tune the wavelength of an ONU 105 while other ONUs are transmitting upstream channel signals, the wavelength locking device 194 may include a tunable receiver device so that the signal to be tuned can be selected from the incoming upstream channel signals.

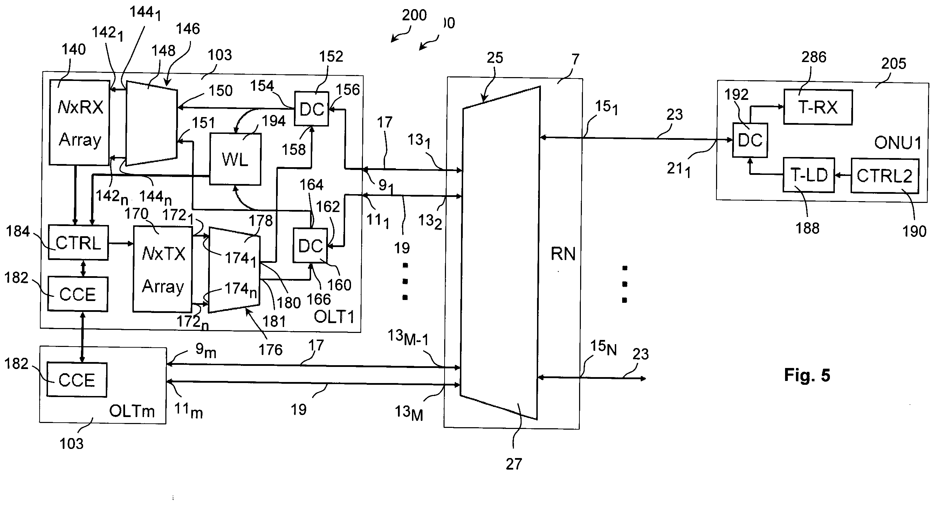

Fig. 5 shows a further embodiment of a PON 200 similar to the embodiment in Fig. 4. Thus, all identical elements and features are referred to using identical reference signs. The essential difference of the PON 200 in Fig. 5 from the PON 100 in Fig. 4 is the use of tunable receiver devices 286 in at least one of the ONUs 205. In this way, an ONU 205 is able to select between more than one communication links or downstream (working or protection) channel signals created by different OLTs 103. It would thus be possible to waive the requirement of coordinating the OLTs 103 with respect to available or allowable (downstream) communication links by providing a common control device (including the local and, as the case may be, a central control units 182). However, the common control device may collect the information of downstream channel signals for each of the ONUs 205 and transmit this information to the respective ONUs 205. In this way, an ONU 205 is not required to scan all possible wavelengths in order to determine which downstream channel signals are actually present.

Fig. 6 shows a further embodiment of a PON 300 comprising OLTs 303, a remote node 7 and ONUs 105. Again, elements and features that are identical to elements and features of the previously explained embodiments are referred to using identical reference signs. Thus, it is referred to the above explanation as concerns the nature and functionality of the respective elements and features.

Each OLT 303 differs from the OLTs 103 in Fig. 4 and 5 in that reflective optical transmitter devices 340 are used instead of tunable transmitter devices 140. As reflective optical transmitter devices 340 seeded reflective semiconductor optical amplifiers (seeded RSOAs) or reflective electro-absorption modulators (REAMs) may be used. In order to seed the reflective optical transmitter devices 340 a central seeding unit 310 is provided. The central seeding unit 310 is adapted to supply seeding light to an input port 314 of a first optical switch 312, which is controlled by the control device 184, the switch 312 having an open and a closed state. An output port 316 of the first optical switch is connected to a first port of an optical circulator device 318, which is configured to supply the seeding light via a second port of the optical circulator device 318 to the WDM working port 180 of the passive optical filter device 176 or M x N AWG 178, respectively. A third port of the optical circulator device 318 is connected to the input port 158 of the directional coupler device 152. In this way, the control device 184 can control the seeding light supplied to the input port 314 of the first optical switch 312 to be supplied to the WDM working port 180 of the AWG 178.

Likewise the central seeding unit 310 is adapted to supply seeding light to an input port 322 of a second optical switch 320, which is controlled by the control device 184, too, the switch 320 having an open and a closed state. An output port 324 of the first optical switch is connected to a first port of an optical circulator device 326, which is configured to supply the seeding light via a second port of the optical circulator device 326 to the WDM protection port 181 of the passive optical filter device 176 or M x N AWG 178, respectively. A third port of the optical circulator device 320 is connected to the input port 166 of the directional coupler device 160. In this way, the control device 184 can control the seeding light supplied to the input port 322 of the first optical switch 320 to be supplied to the WDM protection port 181 of the AWG 178.

As either working wavelengths or protection wavelengths shall be created by the reflective transmitters 340, only one of the switches 312 and 320 is controlled to be in a closed state.

In the OLT 303 according to Fig. 6 each of the n output ports of the transmitter devices 340 is coupled to an optical shutter or switch 330. The optical switches may be combined to an array of switches as shown in Fig. 6 and may further be configured to be controllable by the OLT control device 184. Thus, the control device 184 is able to selectively activate or deactivate each of the reflective optical transmitter devices 340 by appropriately controlling the switches 312 and 322 and each of the switches 330 into a closed or open state.

As shown in Fig. 6, the central seeding unit 310 may comprise several seeding light sources 350. The seeding light sources may be identical or adapted to specifically create the working and protection wavelengths, only, that are required by the respective OLT 303 (see Fig. 2). Identical seeding light sources may be used for safety reasons as redundant seeding light sources. The output port of each seeding light source 350 is coupled to a switching device 352, which is adapted to perform the required switching actions. A simple alternative of a switching device may include a X x 1 switch, each of the X input ports of the X x 1 switch being connected to a respective output port of a dedicated seeding light source 350. The output port of the X x 1 switch may be connected to a 1 x P star coupler, each of the P output ports of the star coupler being connected to an output port of the switching device 352, each of which is coupled to an input port 314, 322 of a first or second optical switch 312, 320 of an OLT. The number X of output ports of the switching device 352 must match or be higher than the number of input ports 314, 322 of the first or second optical switches 312, 320 of the OLTs. In this respect, it shall be noted that it is not mandatory that each OLT has protection capability. In this case the elements of the protection path (including the respective second switch 320) may be omitted.

The central seeding unit may include a local control unit 360 configured to communicate with the local control units 182 in the OLTs 303. The local control unit 360 controls the switching device 352 as regards which of the light sources 350 are to be connected to which of the P output ports. Together with the local control units 182, which may be included within the OLTs, the local control unit 360 forms the common control device, which allows communication between the OLTs and, in case of the embodiment in Fig. 6, the local control unit 360. As apparent from Fig. 6, the local control unit 360 may also serve as a central control unit and take over the respective tasks explained above.

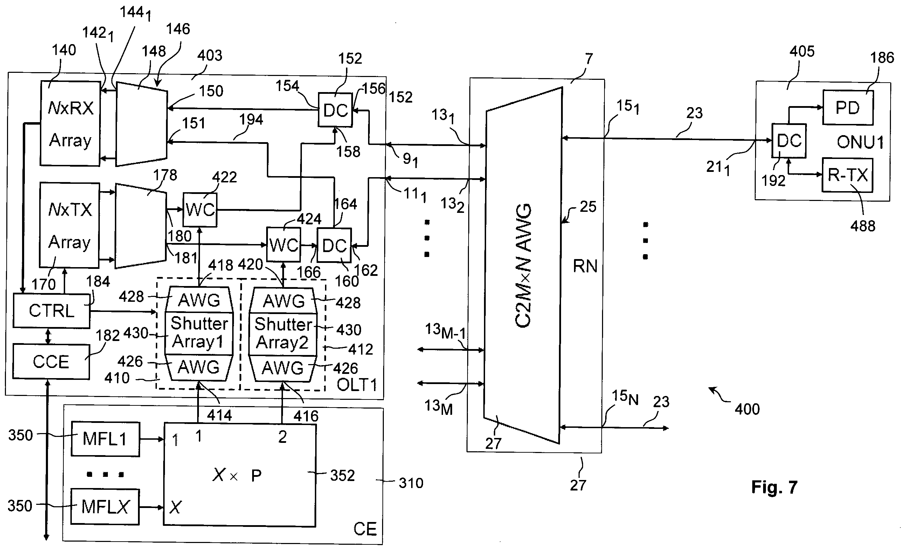

Fig. 7 shows an embodiment of a PON 400 comprising OLTs 403 using tunable optical transmitters 170, a remote node 7 and ONUs 405 comprising reflective optical transmitter devices 488, which are seeded via the OLTs 403. For this purpose, a central seeding unit 310 is provided, which may reveal the same properties than the central seeding unit in Fig. 6. However, as seeding of the ONUs 405 is required, the light sources 350 are adapted to transmit seeding light in an optical band different from the band in which the downstream (working or protection) wavelengths lie. Otherwise the seeding light would interfere with the downstream wavelengths or downstream optical channel signals. For this reason, the RN 7 must comprise a passive optical filter device having the properties of a cyclic M x N AWG, as the upstream and downstream wavelengths must lie in different optical bands.

As selective seeding is required for a selected ONU 405 from a selected OLT 403, it is necessary to provide appropriate selecting means in the OLTs 405. As apparent from Fig. 7, each OLT 403 comprises a first and a second selecting means 410, 412 for selecting working and protection seed wavelengths, respectively.

For providing working seeding wavelengths the central seeding unit 310 supplies broadband seeding light of a selected seeding source 350 via the switching means 352, which is appropriately controlled by the local control unit 360 (not shown in Fig. 7; see Fig. 6), either to an input port 414 of the first selecting means 410 or to an input port 416 of the second selecting means 412. The selecting means 410 is configured to selectively output working seeding wavelengths at an output port 418 to a coupler device 422 provided in the protection path between the WDM working port 180 of the AWG 178 and the input port 158 of the directional coupler 152. The selecting means 412 is configured to selectively output protection seeding wavelengths at an output port 420 to a coupler device 424 provided in the protection path between the WDM protection port 181 of the AWG 178 and the input port 166 of the directional coupler 160.

Each of the selecting means 410, 412 comprises an input AWG 426 and an output AWG 428. The input ports of the AWGs 426 define the input ports 414 and 416, respectively. These AWG filter and demultiplex the broadband light supplied to the input ports 414, 416 and supply the respective wavelengths to input ports of shutters or switches 428, which may be provided as shutter arrays as shown in Fig. 7 and which are controlled by the control device 184. Of course, the AWGs 426 are configured to create exactly the desired working or protection wavelengths needed for seeding the ONUs 405. The working and protection seeding wavelengths required for the respective OLT may be selected by providing a specifically 1 x N AWGs 426 for each OLT 403 or by using a 1 x (N+M-1) AWGs 426 capable of providing the complete set of N+M-1 (working and protection) wavelengths (or working and protection wavelengths) and to select the required wavelengths by appropriately controlling the switches 430. Of course, if 1 x (N+M-1) AWGs 426 are used (or AWGs having a higher number of ports than N+M-1 and merely using the required ports producing the desired wavelengths) the number of switches 426 must be N+M-1, too. Instead of an input AWG 426 any other passive optical filter device having the desired properties may be used.

The output ports of the controllable switches 430, at which the desired wavelengths are output in case the respective switches are controlled into a closed state are connected to the output AWG 428, serve to combine the created and selected wavelengths to a single optical path beginning at the respective output port 418 and 420, respectively. Instead of an 1 x N AWG or a 1 x (N+M-1) AWG 428 any other passive optical device may be used, which is able to combine a respective number of optical paths to a single optical path for all of the desired wavelengths.

As a summary, the invention provides a PON structure using a RN comprising a passive optical filter device having the properties of a, as the case may be, cyclic M x N AWG. A set of n+m-1 wavelengths is sufficient in the feeder area between the OLTs and the RN in order to establish desired communication links between each of the ONUs and at least one selected OLT. This allows to realize open access PONs as the RN is configured to connect at least two OLTs. The OLTs may be owned or managed by different network providers. Due to the structure and functionality of the PON, one can select which OLT and thus which provider has access or which providers have access to a selected ONU. If ONUs with tunable receiver devices are used, each ONU is able to select the OLT a communication link shall be established with.

### List of reference signs

- 1: PON
- 3: OLT
- 5: ONU
- 7: RN
- 9ᵢ: WDM working port (i=1..m)
- 11ᵢ: WDM protection port (i=1..m)
- 13ⱼ: WDM port (i=1..M)
- 15ₖ: distribution port ki=1..N)
- 17: working feeder fiber
- 19: protection feeder fiber
- 21: communication port
- 23: distribution fiber
- 25: passive optical filter device
- 27: N x M AWG
- 29ᵢ: M x N passive optical filter device (i=1...m)
- 31ᵢ: M x N AWG (i=1...m)

- 100: PON
- 103: OLT
- 105: ONU
- 140: array of optical transmitter devices
- 142ₖ: input port (k=1...n)
- 144ₖ: local output port (k=1...n)
- 146: passive optical filter device
- 148: M x N AWG 148
- 150: WDM working port
- 151: WDM protection port
- 152: directional coupler device
- 154: output port of directional coupler device 152
- 156: WDM port of directional coupler device 152
- 158: input port of directional coupler device 152
- 160: directional coupler device
- 162: WDM port of directional coupler device 160
- 164: output port of directional coupler device 160
- 166: input port of directional coupler device 160
- 170: tunable optical transmitter devices
- 172ₖ: output port (k=1...n)
- 174ₖ: local input port (k=1...n)
- 176: passive optical filter device
- 178: M x N AWG 178
- 180: WDM working port
- 181: WDM protection port
- 182: local control unit
- 184: control device
- 186: broadband receiver device
- 188: tunable transmitter device
- 190: ONU control unit
- 192: directional coupler device

- 200: PON
- 205: ONU
- 286: reflective transmitter device

- 300: PON
- 303: OLT
- 310: central seeding unit
- 312: first optical switch
- 314: input port 314 of first optical switch 312
- 316: output port 316 of first optical switch 312
- 318: optical circulator device
- 320: second optical switch 320
- 322: input port 322 of second optical switch 320
- 324: output port 324 of second optical switch 320
- 326: optical circulator device
- 330: optical switch
- 340: reflective optical transmitter devices
- 350: seeding light source
- 352: switching device
- 360: local control unit

- 400: PON
- 403: OLT
- 405: ONU
- 410: first selecting means
- 412: second selecting means
- 414: input port of first selecting means 410
- 416: input port of the second selecting means 412
- 418: output port of first selecting means 410
- 420: output port of the second selecting means 412
- 422: coupler device
- 424: coupler device
- 426: input AWG
- 428: output AWG
- 430: switches

- 488: reflective optical transmitter devices
- m: number of OLTs
- n: number of ONUs
- M: number of WDM ports of AWGs
- N: number of distribution ports / number of local ports of AWGs
- P: number of output ports of central seeding device

## Claims

1. A passive optical network comprising at least two optical line terminals (3, 103, 303, 403), a remote node (7) and a plurality of optical node units (5, 105, 205, 405),
(a) each optical line terminal (3, 103, 303, 403) having a WDM working port (9ᵢ), the remote node (7) having a predetermined number of M WDM ports (13ⱼ) and a predetermined number of N distribution ports (15ₖ), and each optical node unit (5, 105, 205, 405) having a communication port (21ₖ),
(b) each optical line terminal WDM working port (13ⱼ) being connected to a dedicated remote node WDM port (13ⱼ) by a respective working feeder fiber (17), and each optical node unit communication port (21ₖ) being connected to a dedicated remote node distribution port (15ₖ) by a respective distribution fiber (23),
(c) the remote node (7) comprising a passive optical filter device (25) adapted to realize a spectral and spatial filter property of an M x N arrayed waveguide grating, the passive optical filter device (25) defining the M WDM ports (13ⱼ) and the N distribution ports (15ₖ),
(d) each optical line terminal (3, 103, 303, 403) being operable to unidirectionally or bidirectionally communicate with one or more selected or all optical node units (5, 105, 205, 405) using optical channel working signals, wherein each optical line terminal (3, 103, 303, 403) is operable to create and to supply to the working fiber (17) respective downstream optical working channel signals, each of the downstream optical channel working signals being created at a downstream working wavelength suitable for establishing, at the respective downstream working wavelength, a communication link between the optical line terminal (3, 103, 303, 403) and the respective optical node unit (5, 105, 205, 405) via an optical working transmission path comprising the working feeder fiber (17), the remote node (7) and the respective distribution fiber (23), and
(e) that the passive optical network (100, 200, 300, 400) comprises a common control device (182, 184, 360), which is adapted to control the function of each optical line terminal (103, 303, 403) in such a way that only allowable optical communication links between a selected optical line terminal and the optical node units (5, 105, 205, 405) are established,
(f) wherein the common control device comprises local control units (182), wherein each optical line terminal (103, 303, 403) comprises a local control unit (182) and wherein the local control units (182) are arranged to communicate with each other in order to provide or receive information concerning active and/or inactive communication links, or
(g) wherein the common control device comprises local control units (182) and a central control unit (360), wherein each optical line terminal (103, 303 403) comprises a local control unit (182) and wherein the local control units (182) are arranged to communicate with the central control unit (360) in order to provide or receive information concerning active and/or inactive communication links.

2. A passive optical network according to claim 1, **characterized in that** one or more or all optical line terminals (3, 103, 303, 403) have a WDM protection port (9ᵢ), which is connected to a remote node WDM port (13ⱼ) by a respective protection feeder fiber (19), and that each optical line terminal (3, 103, 303, 403) is operable to create and to supply to the protection feeder fiber (19) respective downstream optical channel protection signals, each of the downstream optical channel protection signals being created at a downstream protection wavelength suitable for establishing, at the respective downstream protection wavelength, a communication link between the optical line terminal (3, 103, 303, 403) and the respective optical node unit (5, 105, 205, 405) via an optical protection transmission path comprising the protection feeder fiber (19), the remote node (7) and the respective distribution fiber (23).

3. A passive optical network according to claim 2, **characterized in that** the optical line terminals (3, 103, 303, 403) are arranged to switch, if a failure in at least one working communication link is detected, from communicating with the optical node units (5, 105, 205, 405) via the respective working communication links and the respective optical working transmission paths to communicating with the optical node units (5, 105, 205, 405) via the respective protection communication links and the respective optical protection transmission paths by creating downstream optical protection signals instead of creating downstream optical working signals.

4. A passive optical network according to one of the preceding claims, **characterized in**
(a) **that** the passive optical filter device (25) of the remote node (7) is designed in such a way that the M WDM ports (13ⱼ) and the N distribution ports (15ₖ) are neighboring ports with respect to the spectral and spatial filter property of the passive optical filter device (25),
(b) wherein respective two downstream optical channel working or protection signals, which can be passed through from a given WDM port (13ⱼ) j, with j being an integer number between 1 and M, to neighboring distribution ports (15ₖ) k and k+1, with k being an integer number between 1 and N-1, or respective two upstream optical channel working or protection signals, which can be passed through from a given distribution port (15ₖ) k, with k being an integer number between 1 and N, to neighboring WDM ports (13ⱼ) j and j+1, with j being an integer number between 1 and M-1, are spaced apart, with respect to their wavelengths, by the wavelength grid spacing defined by the grid filter property of the remote node or an integer multiple thereof.

5. A passive optical network according to one of the preceding claims, **characterized in that** the passive optical filter device (25) of the remote node (7) comprises or exclusively consists of an N x M arrayed waveguide grating (27).

6. A passive optical network according to one of the preceding claims, **characterized in that** the WDM working port (9ᵢ) and the WDM protection port (11ᵢ) of an optical line terminal (3, 103, 303, 403) are connected to neighboring WDM ports (13ⱼ) of the remote node (7).

7. A passive optical network according to one of the preceding claims, **characterized in that** the remote node (7) comprises a passive optical filter device (25) adapted to realize the function of an M x N cyclic arrayed waveguide grating or that the passive optical filter device (25) of the remote node (7) comprises or exclusively consists of a cyclic N x M arrayed waveguide grating (27), that the optical line terminals (3, 103, 303, 403) are arranged to create downstream optical working or protection signals having wavelengths in a first band defined by the remote node passive optical filter device (25), and that the optical node units (5, 105, 205, 405) are arranged to create upstream working or protection signals having wavelengths in a second band of the remote node passive optical filter device (25).

8. A passive optical network according to one of the preceding claims, **characterized in that** an optical line terminal (103, 303, 403) comprises a first passive optical filter device (176) within a transmit path of the optical line terminal (103, 303, 403) and a second passive optical filter device (146) within a receive path of the optical line terminal (103, 303, 403), that the WDM working port (9ᵢ) is connected to a first WDM port (180) of the first passive optical filter device (176) and to a first WDM port (150) of the second passive optical filter device (146) via a first directional coupler (152), and that the first (176) and second (146) passive optical filter devices have, with respect to the first WDM ports (180; 150), essentially identical spatial and, with respect to the wavelengths of the signals guided in the transmit and receive paths, identical spectral filter properties as the remote node passive optical filter device (25) has with respect to the WDM port (13ⱼ), which is connected, via the respective working feeder fiber (17), to the working WDM port (9ᵢ) of the optical line terminal (103, 303, 403).

9. A passive optical network according to claims 2 and 8, **characterized in that** in the respective optical line terminal (103, 303, 403) the WDM protection port (11ᵢ) is connected to a second WDM port (181) of the first passive optical filter device (176) and to a second WDM port (151) of the second passive optical filter device (146) via a second directional coupler (160), the first (176) and second (146) passive optical filter devices preferably having, with respect to the second WDM ports (181; 151), essentially identical spatial and, with respect to the wavelengths of the signals guided in the transmit and receive paths, identical spectral filter properties as the remote node passive optical filter device (25) has with respect to the WDM port (13ⱼ₊₁), which is connected, via the respective protection feeder fiber (19), to the protection WDM port (11ᵢ) of the respective optical line terminal (103, 303, 403).

10. A passive optical network according to one of the preceding claims, **characterized in that** the optical node units (5, 105, 405) comprise a broadband receiver device (186) and that the common control device is adapted to control the at least two optical line terminals (3, 103, 303, 403) in such a way that only a single communication link is establishable at a time between an optical line terminal (3, 103, 303, 403) and a selected optical node unit (5, 105, 405).

11. A passive optical network according to one of claims 1 to 9, **characterized in that** the optical node units (205) comprise a wavelength selective receiver device (286) and that the common control device is adapted to control the at least two optical line terminals (3, 103, 303, 403) in such a way that multiple communication links are establishable at a time each between a selected optical line terminal (3, 103, 303, 403) and the same selected optical node unit (205), the multiple communication links using different wavelengths due to the spectral and spatial filter property of the passive optical filter device (25) of the remote node (7).

12. A passive optical network according to one of the preceding claims, **characterized in that** each optical line terminal (3, 103, 303, 403) is adapted to be able to selectively establish communication links with each of the optical node units (5, 105, 405), preferably by selectively activating/deactivating N transmitter devices, which may be realized as laser transmitter devices (170)or reflective transmitter devices (340).

13. A passive optical network according to one of the preceding claims, **characterized in that** the optical transmitter devices (340) of the optical line terminals (303) and/or the optical transmitter devices (188) of the optical node units (105) are reflective transmitter devices, and that a central seeding unit (310) is provided which is configured to create a seeding light and to feed the seeding light to each optical line terminal (303, 403), each optical line terminal (303, 403) being configured to guide the seeding light to the reflective optical transmitter devices (340) of the optical line terminal (303) and/or to the optical transmission path in the direction towards the optical node units.

## Patentansprüche

1. Passives optisches Netzwerk, umfassend zumindest zwei optische Line Terminals (3, 103, 303, 403), einen Remote-Knoten (7) und eine Vielzahl von optischen Knoteneinheiten (5, 105, 205, 405),
(a) wobei jedes optische Line Terminal(3, 103, 303, 403) einen WDM-Arbeitsanschluss (9ᵢ) aufweist, der Remote-Knoten (7) eine vorbestimmte Anzahl an M WDM-Anschlüssen (13ᵢ) und eine vorbestimmte Anzahl an N Verteilungsanschlüssen (15ₖ) aufweist, und jede optische Knoteneinheit (5, 105, 205, 405) einen Kommunikationsanschluss (21ₖ) aufweist,
(b) wobei jeder WDM-Arbeitsanschluss (13ⱼ) eines optischen Line Terminals durch eine entsprechende Arbeitszuführfaser (17) mit einem dedizierten WDM-Anschluss (13ⱼ) eines Remote-Knotens verbunden ist und jeder Kommunikationsanschluss (21ₖ) eines optischen Knotens durch eine entsprechende Verteilungsfaser (23) mit einem dedizierten Verteilungsanschluss (15ₖ) eines Remote-Knotens verbunden ist,
(c) wobei der Remote-Knoten (7) eine passive optische Filtervorrichtung (25) umfasst, die angepasst ist, um eine Spektral- und Raumfiltereigenschaft eines M x N Wellenleiter-Array-Gitters zu realisieren, wobei die passive optische Filtervorrichtung (25) die M WDM-Anschlüsse (13ⱼ) und die N Verteilungsanschlüsse (15ₖ) definiert,
(d) wobei jedes optische Line Terminal (3, 103, 303, 403) betrieben werden kann, um unter Verwendung von Arbeitssignalen eines optischen Kanals unidirektional oder bidirektional mit einem oder mehreren ausgewählten oder allen der optischen Knoteneinheiten (5, 105, 205, 405) zu kommunizieren, wobei jedes optische Line Terminal (3, 103, 303, 403) betrieben werden kann, um entsprechende optische Downstream-Arbeitskanalsignale zu erzeugen und der Arbeitsfaser (17) zuzuführen, wobei jedes der Downstream-Arbeitssignale eines optischen Kanals mit einer Downstream-Arbeitswellenlänge erzeugt wird, die zum Herstellen einer Kommunikationsverbindung zwischen dem optischen Line Terminal (3, 103, 303, 403) und der entsprechenden optischen Knoteneinheit (5, 105, 205, 405) mit der entsprechenden Downstream-Arbeitswellenlänge über einen optischen Arbeitsübertragungspfad geeignet ist, der die Arbeitszuführfaser (17), den Remote-Knoten (7) und die entsprechende Verteilungsfaser (23) umfasst, und
(e) dass das passive optische Netzwerk (100, 200, 300, 400) eine gemeinsame Steuervorrichtung (182, 184, 360) umfasst, die angepasst ist, um die Funktion jedes optischen Line Terminals (103, 303, 403) auf eine solche Weise zu steuern, dass lediglich zulässige optische Kommunikationsverbindungen zwischen einem ausgewählten optischen Line Terminal und den optischen Knoteneinheiten (5, 105, 205, 405) hergestellt werden,
(f) wobei die gemeinsame Steuervorrichtung lokale Steuereinheiten (182) umfasst, wobei jedes optische Line Terminal (103, 303, 403) eine lokale Steuereinheit (182) umfasst und wobei die lokalen Steuereinheiten (182) angeordnet sind, um miteinander zu kommunizieren, um Informationen bezüglich aktiven und/oder inaktiven Kommunikationsverbindungen bereitzustellen oder zu empfangen, oder
(g) wobei die gemeinsame Steuervorrichtung lokale Steuereinheiten (182) und eine zentrale Steuereinheit (360) umfasst, wobei jedes optische Line Terminal (103, 303, 403) eine lokale Steuereinheit (182) umfasst und wobei die lokalen Steuereinheiten (182) angeordnet sind, um mit der zentralen Steuereinheit (360) zu kommunizieren, um Informationen bezüglich aktiven und/oder inaktiven Kommunikationsverbindungen bereitzustellen oder zu empfangen.

2. Passives optisches Netzwerk nach Anspruch 1, **dadurch gekennzeichnet, dass** ein oder mehrere oder alle der optischen Line Terminals (3, 103, 303, 403) einen WDM-Protectionanschluss (9ᵢ) aufweisen, der durch eine entsprechende Protectionzuführfaser (19) mit einem WDM-Anschluss (13ⱼ) eines Remote-Knotens verbunden ist, und dadurch, dass jedes optische Line Terminal (3, 103, 303, 403) betrieben werden kann, um entsprechende Downstream-Protectionsignale eines optischen Kanals zu erzeugen und der Protectionzuführfaser (19) zuzuführen, wobei jedes der Downstream-Protectionsignale eines optischen Kanals mit einer Downstream-Protectionwellenlänge erzeugt wird, die zum Herstellen einer Kommunikationsverbindung zwischen dem optischen Line Terminal (3, 103, 303, 403) und der entsprechenden optischen Knoteneinheit (5, 105, 205, 405) mit der entsprechenden Downstream-Protectionwellenlänge über einen optischen Protectionübertragungspfad geeignet ist, der die Protectionzuführfaser (19), den Remote-Knoten (7) und die entsprechende Verteilungsfaser (23) umfasst.

3. Passives optisches Netzwerk nach Anspruch 2, **dadurch gekennzeichnet, dass** die optischen Line Terminals (3, 103, 303, 403) angeordnet sind, um vom Kommunizieren mit den optischen Knoteneinheiten (5, 105, 205, 405) über die entsprechenden Arbeitskommunikationsverbindungen und die entsprechenden optischen Arbeitsübertragungspfade zum Kommunizieren mit den optischen Knoteneinheiten (5, 105, 205, 405) über die entsprechenden Protectionkommunikationsverbindungen und die entsprechenden optischen Protectionübertragungspfade zu schalten, wenn ein Fehler in zumindest einer Arbeitskommunikationsverbindung erfasst wurde, indem sie optische Downstream-Protectionsignale erzeugen anstatt optische Downstream-Arbeitssignale zu erzeugen.

4. Passives optisches Netzwerk nach einem der vorangehenden Ansprüche, **dadurch gekennzeichnet,**
(a) **dass** die passive optische Filtervorrichtung (25) des Remote-Knotens (7) auf eine solche Weise gestaltet ist, dass die M WDM-Anschlüsse (13ᵢ) und die N Verteilungsanschlüsse (15ₖ) benachbarte Anschlüsse in Bezug auf die Spektral- und Raumfiltereigenschaft der passiven optischen Filtervorrichtung (25) sind,
(b) wobei zwei entsprechende Downstream-Arbeits- oder Protectionsignale eines optischen Kanals, die von einem gegebenen WDM-Anschluss (13ⱼ) j, wobei j eine ganze Zahl zwischen 1 und M ist, zu benachbarten Verteilungsanschlüssen (15ₖ) k und k+1 weitergegeben werden können, wobei k eine ganze Zahl zwischen 1 und N-1 ist, oder zwei entsprechende Upstream-Arbeits- oder Protectionsignale eines optischen Kanals, die von einem gegebenen Verteilungsanschluss (15ₖ) k, wobei k eine ganze Zahl zwischen 1 und N ist, zu benachbarten WDM-Anschlüssen (13ⱼ) j und j+1 weitergegeben werden können, wobei j eine ganze Zahl zwischen 1 und M-1 ist, in Bezug auf deren Wellenlängen um den Wellenlängengridabstand beabstandet sind, der durch die Gridfiltereigenschaft des Remote-Knotens oder ein ganzzahliges Vielfaches davon definiert ist.

5. Passives optisches Netzwerk nach einem der vorangehenden Ansprüche, **dadurch gekennzeichnet, dass** die passive optische Filtervorrichtung (25) des Remote-Knotens (7) ein N x M Wellenleiter-Array-Gitter (27) umfasst oder ausschließlich aus diesem besteht.

6. Passives optisches Netzwerk nach einem der vorangehenden Ansprüche, **dadurch gekennzeichnet, dass** der WDM-Arbeitsanschluss (9ᵢ) und der WDM-Protectionanschluss (11ᵢ) eines optischen Line Terminals (3, 103, 303, 403) mit benachbarten WDM-Anschlüssen (13ⱼ) der Remote-Knoten (7) verbunden sind.

7. Passives optisches Netzwerk nach einem der vorangehenden Ansprüche, **dadurch gekennzeichnet, dass** der Remote-Knoten (7) eine passive optische Filtervorrichtung (25) umfasst, die angepasst ist, um die Funktion eines zyklischen M x N Arrayed-Waveguide Gratings zu realisieren, oder dass die passive optische Filtervorrichtung (25) des Remote-Knotens (7) ein zyklisches N x M Arrayed-Waveguide Grating (27) umfasst oder ausschließlich aus diesem besteht, dass die optischen Line Terminals (3, 103, 303, 403) angeordnet sind, um optische Downstream-Arbeits- oder Protectionsignale zu erzeugen, die Wellenlängen in einem ersten Band aufweisen, das durch die passive FilterVorrichtung (25) des Remote-Knotens definiert ist, und dass die optischen Knoteneinheiten (5, 105, 205, 405) angeordnet sind, um Downstream-Arbeits- oder Protectionsignale zu erzeugen, die Wellenlängen in einem zweiten Band der passiven optischen Filtervorrichtung (25) des Remote-Knotens aufweisen.

8. Passives optisches Netzwerk nach einem der vorangehenden Ansprüche, **dadurch gekennzeichnet, dass** ein optisches Line Terminal (103, 303, 403) eine erste passive optische Filtervorrichtung (176) in einem Übertragungspfad des optischen Line Terminals (103, 303, 403) und eine zweite passive optische Filtervorrichtung (146) in einem Empfangspfad des optischen Line Terminals (103, 303, 403) umfasst, dass der WDM-Arbeitsanschluss (9ᵢ) über einen ersten Richtkoppler (152) mit einem ersten WDM-Anschluss (180) der ersten passiven optischen Filtervorrichtung (176) und mit einem ersten WDM-Anschluss (150) der zweiten passiven optischen Filtervorrichtung (146) verbunden ist und dass die erste (176) und zweite (146) passive optische Filtervorrichtung in Bezug auf die ersten WDM-Anschlüsse (180; 150) im Wesentlichen identische Raum- und in Bezug auf die Wellenlängen der Signale, die in dem Übertragungs- und Empfangspfad geleitet werden, identische Spektralfiltereigenschaften zu denen der passiven optischen Filtervorrichtung (25) des Remote-Knotens in Bezug auf den WDM-Anschluss (13ⱼ) aufweisen, der über die entsprechende Arbeitszuführfaser (17) mit dem WDM-Arbeitsanschluss (9ᵢ) des optischen Line Terminals (103, 303, 403) verbunden ist.

9. Passives optisches Netzwerk nach Anspruch 2 bis 8, **dadurch gekennzeichnet, dass** das entsprechende optische Line Terminal (103, 303, 403) des WDM-Protectionanschlusses (11ᵢ) über einen zweiten Richtkoppler (160) mit einem zweiten WDM-Anschluss (181) der ersten passiven optischen Filtervorrichtung (176) und mit einem zweiten WDM-Anschluss (151) der zweiten passiven optischen Filtervorrichtung (146) verbunden ist, wobei die erste (176) und zweite (146) passive optische Filtervorrichtung vorzugsweise in Bezug auf die zweiten WDM-Anschlüsse (181; 151) im Wesentlichen identische räumliche und in Bezug auf die Wellenlängen der Signale, die in dem Übertragungs- und Empfangspfad geleitet werden, identische Spektralfiltereigenschaften zu denen der passiven optischen Filtervorrichtung (25) des Remote-Knotens in Bezug auf den WDM-Anschluss (13ⱼ₊₁) aufweisen, der über die entsprechende Protectionzuführfaser (19) mit dem WDM-Protectionanschluss (11ᵢ) des entsprechenden optischen Line Terminals (103, 303, 403) verbunden ist.

10. Passives optisches Netzwerk nach einem der vorangehenden Ansprüche, **dadurch gekennzeichnet, dass** die optischen Knoteneinheiten (5, 105, 405) eine Breitband-Empfangsvorrichtung (186) umfassen und dass die gemeinsame Steuerungsvorrichtung angepasst ist, um die zumindest zwei optischen Line Terminals (3, 103, 303, 403) auf eine solche Weise zu steuern, dass zu einem Zeitpunkt lediglich eine einzige Kommunikationsverbindung zwischen einem optischen Line Terminal (3, 103, 303, 403) und einer ausgewählten optischen Knoteneinheit (5, 105, 405) hergestellt werde kann.

11. Passives optisches Netzwerk nach Anspruch 1 bis 9, **dadurch gekennzeichnet, dass** die optischen Knoteneinheiten (205) eine wellenlängenselektive Empfangsvorrichtung (286) umfassen und dass die gemeinsame Steuerungsvorrichtung angepasst ist, um die zumindest zwei optischen Line Terminals (3, 103, 303, 403) auf eine solche Weise zu steuern, dass zu einem Zeitpunkt mehrere Kommunikationsverbindungen jeweils zwischen einem ausgewählten optischen Line Terminal (3, 103, 303, 403) und derselben ausgewählten optischen Knoteneinheit (205) hergestellt werden kann, wobei die mehreren Kommunikationsverbindungen aufgrund der Spektral- und Raumfiltereigenschaft der passiven optischen Filtervorrichtung (25) des Remote-Knotens (7) verschiedene Wellenlängen verwenden.

12. Passives optisches Netzwerk nach einem der vorangehenden Ansprüche, **dadurch gekennzeichnet, dass** jedes optische Line Terminal (3, 103, 303, 403) angepasst ist, um in der Lage zu sein, selektiv Kommunikationsverbindungen mit jeder der optischen Knoteneinheiten (5, 105, 405) aufzubauen, vorzugsweise durch selektives Aktivieren/Deaktivieren von N Sendevorrichtungen, die als Lasersendevorrichtungen (170) oder Reflektionssendevorrichtungen (340) realisiert sein können.

13. Passives optisches Netzwerk nach einem der vorangehenden Ansprüche, **dadurch gekennzeichnet, dass** die optischen Sendevorrichtungen en (340) der optischen Line Terminals (303) und/oder die optischen Sendevorrichtungen en (188) der optischen Knoteneinheiten (105) Reflektionssendevorrichtungen en sind und dass eine zentrale Zuführeinheit (310) bereitgestellt ist, die konfiguriert ist, um ein Zuführlicht zu erzeugen und um das Zuführlicht jedem optischen Line Terminal (303, 403) zuzuführen, wobei jedes optische Line Terminal (303, 403) konfiguriert ist, um das Zuführlicht zu den optischen Reflektionssendevorrichtungen en (340) der optischen Line Terminals (303) und/oder dem optischen Übertragungspfad in der Richtung zu den optischen Knoteneinheiten zu leiten.

## Revendications

1. Réseau optique passif comprenant au moins deux terminaux de ligne optique (3, 103, 303, 403), un nœud distant (7) et une pluralité d'unités de nœud optique (5, 105, 205, 405) ;
(a) chaque terminal de ligne optique (3, 103, 303, 403) présentant un port de travail de multiplexage WDM (9ᵢ), le nœud distant (7) présentant un nombre prédéterminé « M » de ports de multiplexage WDM (13ⱼ) et un nombre prédéterminé « N » de ports de distribution (15ₖ), et chaque unité de nœud optique (5, 105, 205, 405) présentant un port de communication (21ₖ) ;
(b) chaque port de travail de multiplexage WDM de terminal de ligne optique (13ⱼ) étant connecté à un port de multiplexage WDM de nœud distant dédié (13ⱼ) par une fibre d'alimentation de travail respective (17), et chaque port de communication d'unité de nœud optique (21ₖ) étant connecté à un port de distribution de nœud distant dédié (15ₖ) par une fibre de distribution respective (23) ;
(c) le nœud distant (7) comprenant un dispositif de filtre optique passif (25) apte à réaliser une propriété de filtre spectral et spatial d'une grille de guides d'ondes disposés en réseau M x N, le dispositif de filtre optique passif (25) définissant les « M » ports de multiplexage WDM (13ⱼ) et les « N » ports de distribution (15ₖ) ;
(d) chaque terminal de ligne optique (3, 103, 303, 403) étant exploitable de manière à communiquer de manière unidirectionnelle ou bidirectionnelle avec une ou plusieurs unités de nœud optique (5, 105, 205, 405) sélectionnées, ou avec toutes les unités de nœud optique, en utilisant des signaux de travail de canal optique, dans lequel chaque terminal de ligne optique (3, 103, 303, 403) est exploitable de manière à créer, et à fournir, à la fibre de travail (17), des signaux de travail de canal optique en aval respectifs, chacun des signaux de travail de canal optique en aval étant créé à une longueur d'onde de travail en aval appropriée pour établir, à la longueur d'onde de travail en aval respective, une liaison de communication entre le terminal de ligne optique (3, 103, 303, 403) et l'unité de nœud optique respective (5, 105, 205, 405) par l'intermédiaire d'un chemin de transmission de travail optique comprenant la fibre d'alimentation de travail (17), le nœud distant (7) et la fibre de distribution respective (23) ; et
(e) le réseau optique passif (100, 200, 300, 400) comprend un dispositif de commande commun (182, 184, 360) qui est apte à commander la fonction de chaque terminal de ligne optique (103, 303, 403) de telle sorte que seules des liaisons de communication optique admissibles entre un terminal de ligne optique sélectionné et les unités de nœud optique (5, 105, 205, 405) sont établies ;
(f) dans lequel le dispositif de commande commun comprend des unités de commande locale (182), dans lequel chaque terminal de ligne optique (103, 303, 403) comprend une unité de commande locale (182) et dans lequel les unités de commande locale (182) sont agencées de manière à communiquer entre elles afin de fournir ou de recevoir des informations concernant des liaisons de communication actives et/ou inactives ; ou
(g) dans lequel le dispositif de commande commun comprend des unités de commande locale (182) et une unité de commande centrale (360), dans lequel chaque terminal de ligne optique (103, 303, 403) comprend une unité de commande locale (182) et dans lequel les unités de commande locale (182) sont agencées de manière à communiquer avec l'unité de commande centrale (360) afin de fournir ou de recevoir des informations concernant des liaisons de communication actives et/ou inactives.

2. Réseau optique passif selon la revendication 1, **caractérisé en ce qu'**un ou plusieurs ou tous les terminaux de ligne optique (3, 103, 303, 403) présentent un port de protection de multiplexage WDM (9ᵢ), qui est connecté à un port de multiplexage WDM de nœud distant (13ⱼ) par une fibre d'alimentation de protection respective (19), et **en ce que** chaque terminal de ligne optique (3, 103, 303, 403) est exploitable de manière à créer, et à fournir à la fibre d'alimentation de protection (19), des signaux de protection de canal optique en aval respectifs, chacun des signaux de protection de canal optique en aval étant créé à une longueur d'onde de protection en aval appropriée pour établir, à la longueur d'onde de protection en aval respective, une liaison de communication entre le terminal de ligne optique (3, 103, 303, 403) et l'unité de nœud optique respective (5, 105, 205, 405), par l'intermédiaire d'un chemin de transmission de protection optique comprenant la fibre d'alimentation de protection (19), le nœud distant (7) et la fibre de distribution respective (23).

3. Réseau optique passif selon la revendication 2, **caractérisé en ce que** les terminaux de ligne optique (3, 103, 303, 403) sont agencés de manière à commuter, si une défaillance dans au moins une liaison de communication de travail est détectée, d'une communication avec les unités de nœud optique (5, 105, 205, 405) par l'intermédiaire des liaisons de communication de travail respectives et des chemins de transmission de travail optique respectifs, à une communication avec les unités de nœud optique (5, 105, 205, 405) par l'intermédiaire des lignes de communication de protection respectives et des chemins de transmission de protection optique respectifs, en créant des signaux de protection optique en aval, au lieu de créer des signaux de travail optique en aval.

4. Réseau optique passif selon l'une quelconque des revendications précédentes, **caractérisé en ce que** :
(a) le dispositif de filtre optique passif (25) du nœud distant (7) est conçu de telle sorte que les « M » ports de multiplexage WDM (13ⱼ) et les « N » ports de distribution (15ₖ) sont des ports voisins en ce qui concerne la propriété de filtre spectral et spatial du dispositif de filtre optique passif (25) ; et
(b) deux signaux de protection ou de travail de canal optique en aval respectifs, qui peuvent être transmis depuis un port de multiplexage WDM donné (13ⱼ) « j », où « j » est un nombre entier compris entre « 1 » et « M », jusqu'à des ports de distribution voisins (15ₖ) « k » et « k+1 », où « k » est un nombre entier compris entre « 1 » et « N-1 », ou deux signaux de protection ou de travail de canal optique en amont respectifs, qui peuvent être transmis depuis un port de distribution donné (15ₖ) « k », où « k » est un nombre entier compris entre « 1 » et « N », jusqu'à des ports de multiplexage WDM voisins (13ⱼ) « j » et « j+1 », où « j » est un nombre entier compris entre « 1 » et « M-1 », sont espacés, par rapport à leurs longueurs d'onde, par l'espacement de grille de longueurs d'onde défini par la propriété de filtre de grille du nœud distant ou un multiple entier connexe.

5. Réseau optique passif selon l'une quelconque des revendications précédentes, **caractérisé en ce que** le dispositif de filtre optique passif (25) du nœud distant (7) comprend, ou est exclusivement constitué d'une grille de guides d'ondes disposés en réseau « N x M » (27).

6. Réseau optique passif selon l'une quelconque des revendications précédentes, **caractérisé en ce que** le port de travail de multiplexage WDM (9ᵢ) et le port de protection de multiplexage WDM (11ᵢ) d'un terminal de ligne optique (3, 103, 303, 403) sont connectés aux ports de multiplexage WDM voisins (13ⱼ) du nœud distant (7).

7. Réseau optique passif selon l'une quelconque des revendications précédentes, **caractérisé en ce que** le nœud distant (7) comprend un dispositif de filtre optique passif (25) apte à réaliser la fonction d'une grille de guides d'ondes disposés en réseau cyclique « M x N », ou **en ce que** le dispositif de filtre optique passif (25) du nœud distant (7) comprend, ou est exclusivement constitué d'une grille de guides d'ondes disposés en réseau cyclique « N x M » (27), **en ce que** les terminaux de ligne optique (3, 103, 303, 403) sont agencés de manière à créer des signaux de travail ou de protection optique en aval présentant des longueurs d'onde dans une première bande définie par le dispositif de filtre optique passif de nœud distant (25), et **en ce que** les unités de nœud optique (5, 105, 205, 405) sont agencées de manière à créer des signaux de travail ou de protection optique en amont présentant des longueurs d'onde dans une seconde bande du dispositif de filtre optique passif de nœud distant (25).

8. Réseau optique passif selon l'une quelconque des revendications précédentes, **caractérisé en ce qu'**un terminal de ligne optique (103, 303, 403) comprend un premier dispositif de filtre optique passif (176) dans un chemin de transmission du terminal de ligne optique (103, 303, 403) et un second dispositif de filtre optique passif (146) dans un chemin de réception du terminal de ligne optique (103, 303, 403), **en ce que** le port de travail de multiplexage WDM (9ᵢ) est connecté à un premier port de multiplexage WDM (180) du premier dispositif de filtre optique passif (176) et à un premier port de multiplexage WDM (150) du second dispositif de filtre optique passif (146), par l'intermédiaire d'un premier coupleur directionnel (152), et **en ce que** le premier dispositif de filtre optique passif (176) et le second dispositif de filtre optique passif (146) présentent, par rapport aux premiers ports de multiplexage WDM (180 ; 150), des propriétés de filtre spatial essentiellement identiques et, en ce qui concerne les longueurs d'onde des signaux guidés dans les chemins de transmission et de réception, des propriétés de filtre spectral identiques à celles que présente le dispositif de filtre optique passif de nœud distant (25) par rapport au port de multiplexage WDM (13ⱼ), qui est connecté, par l'intermédiaire de la fibre d'alimentation de travail respective (17), au port de multiplexage WDM de travail (9ᵢ) du terminal de ligne optique (103, 303, 403).

9. Réseau optique passif selon l'une quelconque des revendications 2 et 8, **caractérisé en ce que,** dans le terminal de ligne optique respectif (103, 303, 403), le port de protection de multiplexage WDM (11ᵢ) est connecté à un second port de multiplexage WDM (181) du premier dispositif de filtre optique passif (176) et à un second port de multiplexage WDM (151) du second dispositif de filtre optique passif (146) par l'intermédiaire d'un second coupleur directionnel (160), le premier dispositif de filtre optique passif (176) et le second dispositif de filtre optique passif (146) présentant, de préférence, par rapport aux seconds ports de multiplexage WDM (151 ; 181), des propriétés de filtre spatial essentiellement identiques, et, en ce qui concerne les longueurs d'onde des signaux guidés dans les chemins de transmission et de réception, des propriétés de filtre spectral identiques à celles que présente le dispositif de filtre optique passif de nœud distant (25) par rapport au port de multiplexage WDM (13ⱼ₊₁), qui est connecté, par l'intermédiaire de la fibre d'alimentation de protection respective (19), au port de multiplexage WDM de protection (11ᵢ) du terminal de ligne optique respectif (103, 303, 403).

10. Réseau optique passif selon l'une quelconque des revendications précédentes, **caractérisé en ce que** les unités de nœud optique (5, 105, 405) comprennent un dispositif récepteur à large bande (186), et **en ce que** le dispositif de commande commun est apte à commander lesdits au moins deux terminaux de ligne optique (3, 103, 303, 403) de telle sorte que seule une liaison de communication peut être établie à la fois entre un terminal de ligne optique (3, 103, 303, 403) et une unité de nœud optique sélectionnée (5, 105, 405).

11. Réseau optique passif selon l'une quelconque des revendications 1 à 9, **caractérisé en ce que** les unités de nœud optique (205) comprennent un dispositif récepteur sélectif en longueur d'onde (286), et **en ce que** le dispositif de commande commun est apte à commander lesdits au moins deux terminaux de ligne optique (3, 103, 303, 403) de telle sorte que de multiples liaisons de communication peuvent être établies à la fois entre un terminal de ligne optique sélectionné (3, 103, 303, 403) et la même unité de nœud optique sélectionnée (205), les multiples liaisons de communication utilisant différentes longueurs d'onde sous l'effet de la propriété de filtre spectral et spatial du dispositif de filtre optique passif (25) du nœud distant (7).

12. Réseau optique passif selon l'une quelconque des revendications précédentes, **caractérisé en ce que** chaque terminal de ligne optique (3, 103, 303, 403) est adapté de manière à être en mesure d'établir, de façon sélective, des liaisons de communication avec chacune des unités de nœud optique (5, 105, 405), de préférence en activant/désactivant de façon sélective « N » dispositifs émetteurs, qui peuvent être réalisés sous la forme de dispositifs émetteurs laser (170) ou de dispositifs émetteurs réfléchissants (340).

13. Réseau optique passif selon l'une quelconque des revendications précédentes, **caractérisé en ce que** les dispositifs émetteurs optiques (340) des terminaux de ligne optique (303) et/ou les dispositifs émetteurs optiques (188) des unités de nœud optique (105) sont des dispositifs émetteurs réfléchissants, et **en ce qu'**une unité centrale d'ensemencement (310) est fournie, laquelle est configurée de manière à créer une lumière d'ensemencement et à introduire la lumière d'ensemencement dans chaque terminal de ligne optique (303, 403), chaque terminal de ligne optique (303, 403) étant configuré de manière à guider la lumière d'ensemencement vers les dispositifs émetteurs optiques réfléchissants (340) du terminal de ligne optique (303) et/ou vers le chemin de transmission optique dans la direction allant vers les unités de nœud optique.
